# NEUE EUROPÄISCHE PATENTSCHRIFT

(11) **EP 1 200 733 B2**
(45) Veröffentlichungstag und Bekanntmachung des Hinweises auf die Entscheidung über den Einspruch: **15.02.2012**
(45) Hinweis auf die Patenterteilung: 24.09.2003
(21) Anmeldenummer: 00925250.3
(22) Anmeldetag: 27.04.2000
(51) Int. Cl.: F03D 11/00

(54) **WINDENERGIEANLAGE MIT EINEM GESCHLOSSENEN KÜHLKREISLAUF**
WIND ENERGY FACILITY WITH A CLOSED COOLING CIRCUIT
EOLIENNE A CIRCUIT DE REFROIDISSEMENT FERME

(30) Priorität: 14.07.1999 DE 19932394; 30.07.1999 DE 19936069; 07.01.2000 DE 10000370
(43) Veröffentlichungstag der Anmeldung: 02.05.2002
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2000/003828
(87) Internationale Veröffentlichungsnummer: WO 2001/006121

(56) Entgegenhaltungen:
- WO-A-99/30031
- WO-A1-00/68570
- DE-A- 19 528 862

## Beschreibung

Bei der Umformung von Energie entstehen regelmäßig Verluste in Form von Wärme. Dies gilt sowohl bei von der Umformung der kinetischen Energie des Windes in elektrische Energie im Generator einer Windenergieanlage, wobei sich diese Verluste regelmäßig im Hauptantriebsstrang der Windenergieanlage einstellen als auch bei der elektrischen Einspeisung der von der Windenergienalage erzeugten Energie in ein Mittelspannungsnetz. Hierzu sind regelmäßig Einrichtungen der Leistungselektronik, beispielsweise Wechselrichter und/oder Transformatoren notwendig. Im Hauptantriebsstrang, welcher über eine Windenergieanlage in der Gondel der Windenergieanlage untergebracht ist, entstehen die Verluste maßgeblich im Getriebe, an den Lagern und im Generator oder an anderen Steuereinheiten wie z.B. in den Hydraulikanlagen oder ähnlichen Steuer- und Regelungseinheiten, mittels denen die Rotorblätter angestellt oder die Windenergieanlage zum Wind gestellt wird. Bei getriebelosen Windenergieanlagen, z.B. vom Typ E-66 der Firma Enercon, entstehen die Hauptverluste beim Hauptantriebsstrang im Generator, d.h. in der Gondel (Kopf) der Windenergieanlage.

Bei der Netzeinspeisung entstehen maßgeblich die Verluste beim Netztransformator und ggf. in der Leistungselektronik, z.B. im Wechselrichter.

Bei einer 1,5 Megawatt Windenergieanlage können die Verluste durchaus im Bereich von 60 bis 100 kW liegen. Diese Verluste werden bislang über Lüfter an die Umgebung abgeführt. Dabei wird mittels der Lüfter kalte Luft von außen angesaugt und das entsprechende Bauteil, z.B. der Generator gekühlt. Die erwärmte Luft wird anschließend wieder nach außen geblasen.

Es sind auch bereits Überlegungen darüber gemacht worden, den Generator mit Wasser zu kühlen und das dann erwärmte Wasser mit einem Wärmetauscher wieder herunterzukühlen. Alle diese bekannten Lösungen haben gemeinsam, dass stets sehr viel Luft von außen benötigt ist. Dies ist besonders nachteilig, wenn die Außenluft feucht oder - insbesondere in Küstenregionen - salzhaltig ist und die Kühlelemente mit dieser feuchten und salzhaltigen Luft beaufschlagt werden. Besonders extrem ist diese Problematik bei Windenergieanlagen, die direkt an der Küste oder - in der Offshore-Technik - im Salzwasser stehen.

Eine Windenergieanlage mit den Merkmalen des Oberbegriffs von Anspruch 1 ist aus WO-A-99/30031 bekannt. Als weiterer Stand der Technik sei allgemein noch auf die WO 00/68570 verwiesen.

Es ist Aufgabe der Erfindung, die vorgenannten Nachteile zu vermeiden und eine Kühlung für eine Windenergieanlage vorzusehen, welche die Verluste der Windenergieanlage reduziert.

Die Aufgabe wird mit einer Windenergiearilage mit dem Merkmal nach Anspruch 1 gelöst. Vorteilhafte Weiterbildungen sind in den Unteransprüchen beschrieben.

Der Erfindung liegt das Konzept zugrunde, für eine Windenergieanlage einen im wesentlichen geschlossenen Kühlkreislauf vorzusehen, so dass keine oder praktisch keine Außenluft für die Kühlung verwendet werden muss. Hierbei zirkuliert die Kühlluft innerhalb der Windenergieanlage von deren Gondel bis in den Turm bzw. zum Fuß der Windenergieanlage und die von dem Kühlmedium, bevorzugt Luft, bei der Kühlung aufgenommene Energie wird über den Turm der Windenergieanlage abgegeben. Der Turm der Windenergieanlage ist stets dem Wind ausgesetzt, so dass der Turm der Windenergieanlage als Kühlelement oder Wärmetauscher dient, welche die aufgenommene Energie an den den Turm umstreichenden Wind abgibt.

Ein weiterer Vorteil des erfindungsgemäßen Konzeptes ist es, dass der Turm durch seine Funktion als Wärmetauscher und als tragendes Teil der Windenergieanlage auch bei sehr kalten Außentemperaturen von ca. -20° bis -30°C von innen her aufgeheizt wird. Dadurch kann die Windenergieanlage auch dann noch in Betrieb bleiben. Nach bisherigem Stand der Technik muss ein spezieller kältefester Stahl für sehr kalte Standorte wie z.B. Nord-Schweden, Norwegen, Finnland, Kanada usw. eingesetzt werden.

Es ist auch möglich, wenn dies wegen sehr niedriger Außentemperaturen unterhalb des Gefrierpunktes erwünscht ist, die Erwärmung der Rotorblätter mit an den Kühlkreislauf anzuschließen, so daß für die Erwärmung der Rotorblätter nicht eigens Energie aufgebracht werden muß.

Die Kühlung des Kühlmediums durch den Turm erfolgt dadurch, daß am Turm selbst (innen- oder außenseitig) wenigstens ein Luftkanal ausgebildet wird, durch welchen die erwärmte Luft strömt, damit sie ihre Energie zumindest teilweise an die Turmwandung abgeben kann.

Ein Luftkanal wird bevorzugt dadurch gebildet, daß der Turm doppelwandig ausgeführt ist, so daß ein Teil des Kühlkanals durch die tragende Wandung des Turms gebildet wird.

Durch die Verwendung des Turms der Windenergieanlage, welcher meist aus Stahl gefertigt ist als Kühlelement bzw. Wärmetauscher, wird ein ohnehin vorhandenes Bauteil, welches jede Windenergieanlage benötigt, in einer vorteilhaften Funktion genutzt. Gewärmte Luft strömt innen im Stahlturm an dessen Außenwand. Diese Außenwand ist sehr großflächig, beispielsweise bei einer 1,5 Megawattanlage etwa 500 qm und bietet daher eine sehr große Aufheiz/Kühlfläche. Der den Turm umstreichende Wind kühlt diesen kontinuierlich ab.

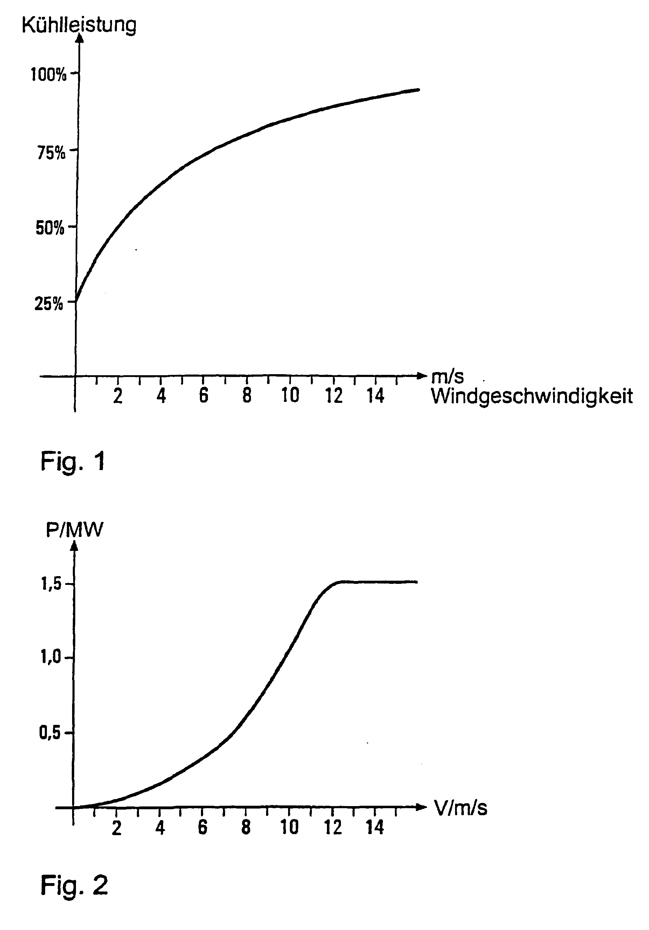

Die mögliche Kühlleistung des Windes steigt mit ansteigender Windgeschwindigkeit an. Dieser Zusammenhang ist in Fig. 1 aufgezeigt. Mit steigender Windgeschwindigkeit steigt ebenfalls die Generatorleistung und damit auch die Verlustleistung. Der Zusammenharig zwischen der Generatorleistung in Abhängigkeit mit der Windgeschwindigkeit ist in Fig. 2 aufgezeigt. Somit können steigende Verlustleistungen relativ leicht abgeführt werden, weil auch die Kühlleistung des Turms der Windenergieanlage mit dem Anstieg der Verlustleistung ansteigt.

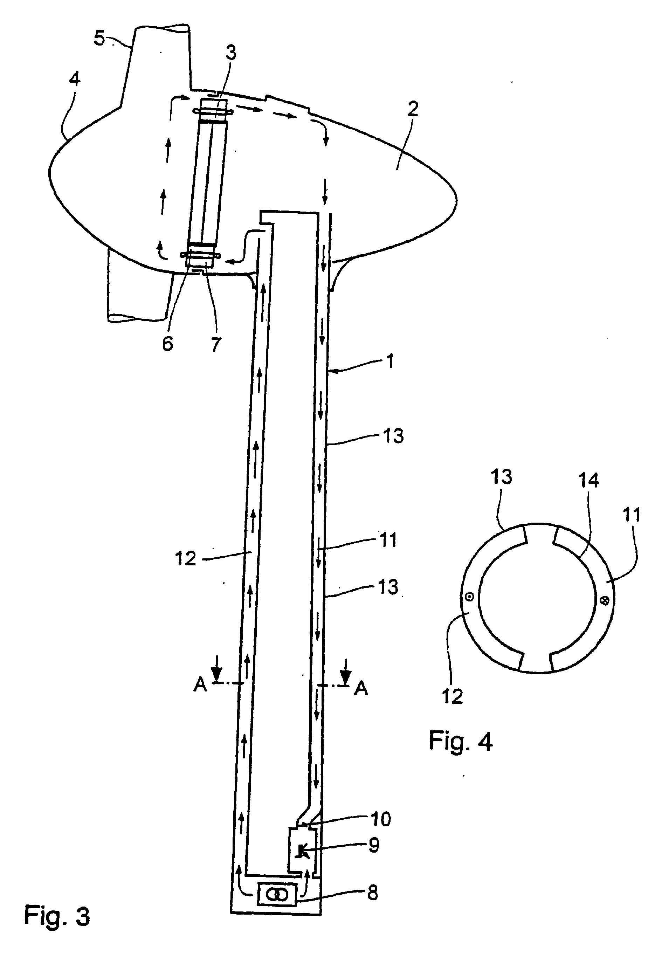

Fig. 3 zeigt ein Ausführungsbeispiel der Erfindung anhand einer Windenergieanlage vom Typ E-66 der Firma Enercon, welche über eine Generatorleistung von 1,5 Megawatt verfügt. Fig. 3 zeigt im Querschnitt eine Windenergieanlage 1 mit einer Gondel 2 am Kopfende, welche von einem Turm 3 getragen wird. Dieser Turm ist im Erdboden verankert (nicht dargestellt).

Die Gondel nimmt den Hauptantriebsstrang der Windenergieanlage auf. Dieser Hauptantriebsstrang besteht im wesentlichen aus einem Rotor 4 mit daran angebrachten Rotorblätter 5 (nur im Ausriß dargestellt) sowie einem mit dem Rotor verbundenen Generator 3, welcher seinerseits einen Generatorläufer 6 und einen Generatorstator 7 aufweist. Dreht sich der Rotor und damit der Generatorläufer, wird elektrische Energie, beispielsweise als Wechselstrom (Gleichstrom) erzeugt.

Ferner weist die Windenergieanlage einen Transformator 8, sowie diesem vorgeschaltet ein Wechselrichter 9 auf, wobei der Wechselrichter dem Transformator die elektrische Energie in der Form eines Wechsel- bzw. Drehstroms zuführt. Der Transformator speist die von der Windenergieanlage erzeugte Energie in ein Netz, vorzugsweise ein Mittelspannungsnetz (nicht dargestellt).

Der Turm ist - wie in Fig. 3 zu erkennen - zum Teil doppelwandig ausgeführt und bildet in dem doppelwandigen Bereich jeweils einen Kühlkanal aus. In diesem Kühlkanal ist ein Ventilator (es können auch mehrere Ventilatoren vorgesehen werden) 10 ausgebildet, welcher die Luft durch die Kühlkanäle treibt.

Fig. 4 zeigt im Querschnitt entlang der Linie A-A nach Fig. 3 die Turmwandung. Hierbei ist zu sehen, daß im dargestellten Beispiel zwei Kühlkanäle 1 1, 12 ausgebildet sind, in dem der Turm über einen bestimmten Bereich doppelwandig ausgeführt ist. Die vom Generator erwärmte Luft fließt nunmehr über einen Luftkanal 12 aus den Maschinen heraus (Gondel) in den oberen Turmbereich. Dort wird die erwärmte Luft an die Innenseite des Stahlturms gelenkt. Der Stahlturm ist - wie bereits erwähnt - auf einer großen Länge, beispielsweise von ca. 50 bis 80% doppelwandig mit einer Außenwand 13 und einer Innenwand 14 ausgeführt und bildet dort den Kühlkanal 11. Die innenliegende Wand 14 in dem Kühlkanal kann hierbei aus einem einfachen Material, z.B. Kunststoff oder einem Segeltuch bestehen. Die erwärmte Luft vom Generator 3 muß nun über eine große Strecke an der Innenseite des Stahlturms 1 entlangströmen. Dabei wird der Turm bzw. dessen Stahl großflächig aufgewärmt und die Luft hierbei abgekühlt. Im unteren Bereich des Turms befindet sich der Wechselrichter 9 und der Mittelspannungstransformator 8 (und/oder weitere elektrische Einrichtungen). Auch diese Bauteile müssen gekühlt werden. Die abgekühlte Generatorluft wird nun als erstes durch den Wechselrichter geführt. Hiermit werden die Einrichtungen der Leistungselektronik aktiv abgekühlt. Die aus dem Wechselrichter austretende Luft wird nunmehr zum Transformator weitergeleitet und kühlt auch den Transformator. Anschließend steigt die Luft über den zweiten Kühlkanal 12 wieder nach oben zum Maschinenhaus und zum Generator.

Der Kühlkreislauf ist somit geschlossen und es muß nicht notwendigerweise von außen her gekühlte Luft herangeführt werden.

Zur Kühlung aller Bauteile, insbesondere der empfindlichen Bauteile, der Windenergieanlage wird somit stets die gleiche Luft verwendet.

Falls notwendig, können selbstverständlich auch Luftfilter und weitere Kühleinrichtungen (z.B. Wärmetauscher) im Kühlkanal untergebracht werden, falls dies erwünscht ist.

Die Vorteile der Erfindung bestehen darin, daß keine salzhaltige oder feuchte Luft die empfindlichen Komponenten wie Generator, Wechselrichter und Transformator berührt bzw. hiermit in Kontakt kommt. Innerhalb des Maschinenhauses und des Turmes ist die Korrosionsgefahr damit drastisch verringert. In der Windenergieanlage, insbesondere in dessen Turm kann sich keine Schimmel- oder Pilzbildung einstellen.

Insgesamt wird für die Kühlung der gesamten Windenergieanlage erheblich weniger Energie als bisher benötigt, da die (sekundäre) Kühlleistung außen am Turm vom Wind erbracht wird.

Durch Ausbildung von Kühlkanälen in den Rotorblättern und durch den Anschluß dieser Kühlkanäle an den erfindungsgemäßen Kühlkreislauf ist es auch möglich, die von dem Generator erwärmte Luft zunächst in die Kühlkanäle der Rotorblätter einzuleiten, so daß in der kalten Jahreszeit, insbesondere bei Temperaturen um den Gefrierpunkt, die Rotorblätter enteist werden können. Die Ausbildung von Kühlkanälen in einem Rotorblatt ist beispielsweise auch bekannt aus DE 195 28 862.9.

Die Ausbildung der Kühlkanäle im Maschinenhaus erfolgt durch entsprechende Wandungen und Luftleiteinrichtungen, mittels denen die Luft so gelenkt wird, daß sie auf die Elemente, wie z.B. den Generator trifft.

Es sollte die Kühlleistung des Turmes - beispielsweise an sehr warmen Tagen - nicht ausreichen, ist es auch möglich, in den Kühlkreislauf weitere Kühlelement wie z.B. übliche Wärmetauscher einzuschließen.

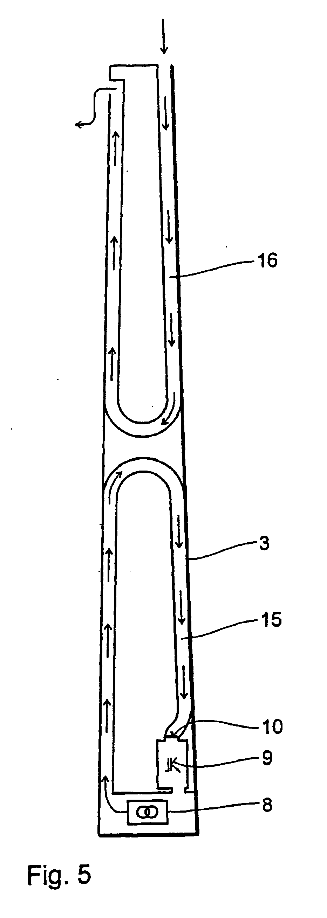

Figur 5 zeigt eine alternative Ausführungsform des Kühlkreislaufs gemäß Figur 3. Hierbei ist zu sehen, daß die Windenergieanlage zwei separate und unabhängige geschlossene Kühlkreisläufe 15, 16 aufweist, die jeweils die aufgenommene Wärme an den Turm abgeben. Die beiden Kühlkreisläufe 15, 16 sind jedoch - anders als in Figur 3 dargestellt -voneinander getrennt. Hierbei weist jeder einzelne der Kühlkreisläufe 15, 16 am Wendepunkt innerhalb des Turms 3 eine Durchführung oder einen Querkanal auf, so daß die turmabströmende bzw. turmaufströmende Luft an die jeweils gegenüberliegende Seite des Turms gelenkt wird und somit weiter abgekühlt jeweils zur zu kühlenden Einheit, sei es den Generator oder die Leistungselektronik geführt wird.

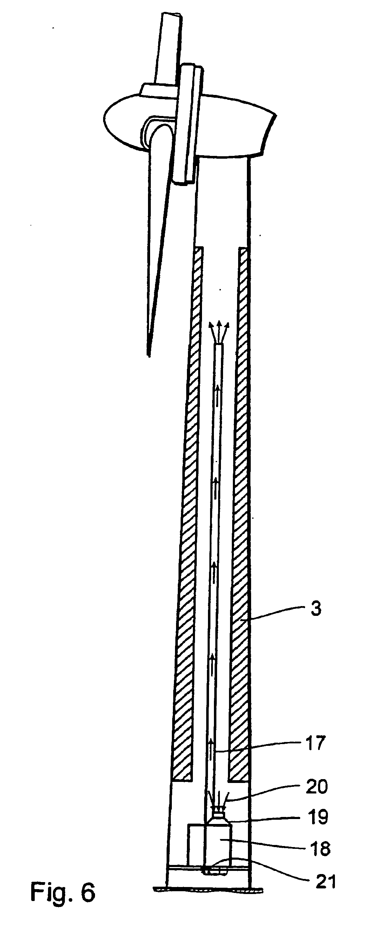

Figur 6 zeigt ein weiteres Ausführungsbeispiel einer erfindungsgemäßen Windenergieanlage. Hierbei ist durch das Innere des unteren Turmabschnitts ein Luftkanal, beispielsweise ein Abluftschlauch 17 geführt. Dieser kann beispielsweise sehr einfach auch bei einer bestehenden Windenergieanlage nachgerüstet werden und im Turm 3 befestigt (aufgehängt) werden. Durch diesen Abluftschlauch 17 wird erwärmte Luft, die von einem Leistungsschrank 18, beispielsweise 600 kW Leistungsschrank stammt vom Turmboden nach oben geführt und tritt am Ausgang des Abluftschlauchs 17 in den Turm. Von dort strömt die erwärmte Luft nach Abkühlung an der Turmwandung wieder nach unten und kann dort von einer Lüftungseinrichtung 20 (für Zuluft), die über eine Lufthaube 19 an den Leistungsschrank 18 gekoppelt ist, wieder angesaugt werden. Der Abluftschlauch 17 kann direkt am Luftaustritt des Leistungsschranks 18 angeschlossen sein oder am Eingang des Abluftschlauchs 17 ist eine zweite Lüftungseinrichtung 21 vorgesehen, die die erwärmte Luft des Leistungsschranks 18 ansaugt und in den Abluftschlauch 17 bläst. Der Abluftschlauch ist bevorzugt aus Kunststoff und somit sehr leicht ausführbar und verfügt über ein sehr geringes Gewicht, was seine Befestigung und seine Nachrüstung bei einer Windenergieanlage erleichtert.

Zur Verbesserung der Kühlwirkung der Gondel 2 kann diese vollständig oder teilweise aus Metall, bevorzugt Aluminium ausgeführt werden, um somit auch die Kühlwirkung der Gondel, welche ständig vom Wind umströmt wird, auszunutzen und damit die Generatorkühlung zu verstärken. Hierzu kann es auch vorteilhaft sein, die Gondel innenseitig mit einer oberflächenvergrößernden Struktur, beispielsweise Kühlrippen auszustatten.

Wie erste Versuche zeigen, ist die Ausführung eines geschlossenen Kühlkreislaufs unter Verwendung des in Figur 6 gezeigten Luftkanals äußert effektiv und besonders kostengünstig, weil die Investition, die für einen Ablauf einen Luftkanal, insbesondere einen Kunstoffabluftschlauch benötigt werden, nur sehr gering sind im Vergleich zu einem Wärmetauscher und dessen ständigen Unterhaltungskosten. Darüber hinaus ist die Kühlung äußert effektiv.

## Patentansprüche

1. Windenergieanlage (1) mit einem völlig geschlossenen oder teilweise geschlossenen Kühlkreislauf,
**dadurch gekennzeichnet, dass** der Turm der Windenergieanlage als Kühlelement und/oder Wärmetauscher in den Kühlkreislauf mit darin befindlicher Luft als Kühlmedium eingebunden ist, und dass die aus dem Kühlkreislauf abzuführende Wärme im Wesentlichen über den Turm der Windenergieanlage abgegeben wird.

2. Windenergieanlage nach einem der vorhergehenden Ansprüche,
**dadurch** gekenntzeichnet, dass an dem Kühlkreislauf sowohl der Antriebsstrang (3, 4) der Windenergieanlage oder Teile des Antriebsstrangs und/oder die elektrischen Einrichtungen (8, 9) zur Umformung der elektrischen Energie angeschlossen sind.

3. Windenergieanlage nach einem der vorhergehenden Ansprüche,
**dadurch gekennzeichnet, dass** der Turm (3) über wenigstens zwei Abschnitte entlang seiner Längsachse doppelwandig ausgeführt ist (Fig. 4) und ein doppelwandiger Bereich einen Kühlkanal (12, 11) bildet, bei welchem die in den Kühlkanal eintretende erwärmte Luft ihre Wärme an die Außenwand des Turmes (3) abgibt.

4. Windenergieanlage nach einem der vorhergehenden Ansprüche,
**dadurch gekennzeichnet, dass** zur Kühlung des Hauptantriebsstrangs (3, 4) wie auch der Einrichtungen (8, 9) der Leistungselektronik im wesentlichen stets die gleiche Luft verwendet wird.

5. Windenergieanlage nach einem der vorhergehenden Ansprüche,
**dadurch gekennzeichnet, dass** der Kühlkanal über wenigstens einen Ventilator (10) verfügt, der für eine Zirkulation der Luft innerhalb des Kühlkreislaufes sorgt.

6. Windenergieanlage nach einem der vorhergehenden Ansprüche,
**dadurch gekennzeichnet, dass** die Windenergieanlage auch bei Außentemperaturen von ca. -20°C bis -40°C im Betrieb gehalten werden kann und der Turm durch den Kühlkreislauf erwärmt wird.

7. Windenergieanlage nach einem der vorhergehenden Ansprüche,
**dadurch gekennzeichnet, dass** die Windenergieanlage wenigstens zwei völlig geschlossene oder wenigstens teilweise geschlossene Kühlkreisläufe aufweist, wobei ein Kühlkreislauf zur Kühlung des Antriebsstrangs der Windenergieanlage und der andere Kühlkreislauf zur Kühlung der elektrischen Einrichtung zur Umformung der elektrischen Energie dient.

8. Windenergieanlage nach einem der vorhergehenden Ansprüche,
**dadurch gekennzeichnet, dass** wenigstens eine Luftleitung vorgesehen ist, welche zum Transport von erwärmter Luft dient.

9. Windenergleanlage nach Anspruch 8,
**dadurch gekennzeichnet, dass** die Luftleitung durch einen Schlauch gebildet wird, welcher an einen Wärmeerzeuger, beispielsweise an die Luftaustrittsöffnung einer elektrischen Einrichtung zur Umformung der elektrischen Energie und/oder Teile des Antriebsstrangs (Generator) angeschlossen ist.

10. Windenergiearilage nach Anspruch 9,
**dadurch gekennzeichnet, dass** der Schlauch lufteingangsseitig an eine Ventilationseinrichtung (Lüfter) angeschlossen ist, mittels welchem erwärmte Luft in den Schlauch geblasen wird.

11. Windenergieanlage nach einem der vorhergehenden Ansprüche 8 - 10,
**dadurch gekennzeichnet, dass** der Schlauch mehr als zehn Meter, vorzugsweise mehr als fünfundzwanzig Meter lang ist und im unteren Teil des Turms so angebracht ist, dass erwärmte Luft, die von einer elektrischen Einrichtung zur Umformung der elektrischen Energie, beispielsweise einem Schaltschrank bzw. einem Leistungsschrank stammt, durch den Schlauch geblasen wird und erwärmte Luft am Schlauausgang wieder austritt, so dass sie sich an der Turmwandung abkühlen kann und wieder zum Turmboden strömt.

12. Windenergieanlage nach einem der vorhergehenden Ansprüche,
**dadurch gekennzeichnet, dass** die Gondel aus einem Metall, bevorzugt Aluminium ganz oder teilweise besteht.

13. Windenergieanlage nach Anspruch 12,
**dadurch gekennzeichnet, dass** die Gondel ganz oder teilweise mit Kühlrippen oder anderen Mitteln zur Vergrößerung der Gondeloberfläche ausgestattet ist.

14. Verwendung eines Turms einer Windenergieanlage als Kühlelement und/oder Wärmetauscher zur Kühlung von Luft, die durch Wärme erzeugende Einrichtungen, beispielsweise den Antriebsstrang und/oder elektrische Einrichtung zum Umformen der elektrischen Energie, der Windenergieanlage erwärmt wird.

## Claims

1. Wind energy unit (1) having a completely closed or partly closed cooling circuit,
**characterised in that** the tower of the wind energy unit is integrated into the cooling circuit as a cooling element and/or heat exchanger, with air container in the cooling circuit as cooling medium, and that the heat to be dissipated out of the cooling circuit is given off substantially via the tower of the wind energy unit.

2. Wind energy unit according to one of the preceding claims,
**characterised in that** both the drive line (3, 4) of the wind energy unit or parts of the drive line and/or the electric installations (8, 9) for transforming the electric energy are connected to the cooling circuit,

3. Wind energy unit according to one of the preceding claims,
**characterised in that** the tower (3) is of double-walled construction over at least two sections along its longitudinal axis (Fig. 4) and a double-walled region forms a cooling channel (12, 11) in which the heated air entering the cooling channel gives off its heat to the outside wall of the tower (3).

4. Wind energy unit according to one of the preceding claims,
**characterised in that** for cooling the main drive line (3, 4) and also the installations (8, 9) of the power electronics substantially the same air is always used.

5. Wind energy unit according to one of the preceding claims,
**characterised in that** the cooling channel has at least one fan (10) which ensures circulation of the air within the cooling circuit.

6. Wind energy unit according to one of the preceding claims,
**characterised in that** the wind energy unit can be kept in operation even at outside temperatures of approximately -20°C to -40°C and the tower is heated by the cooling circuit,

7. Wind energy unit according to one of the preceding claims,
**characterised in that** the wind energy unit has at least two completely closed or at least partly closed cooling circuits, wherein one cooling circuit serves to cool the drive line of the wind energy unit and the other cooling circuit serves to cool the electric equipment for transforming the electric energy.

8. Wind energy unit according to one of the preceding claims,
**characterised in that** at least one air line is provided which serves to transport heated air.

9. Wind energy unit according to claim 8,
**characterised in that** the air line is formed by a flexible hose which is connected to a heat generator, for example to the air outlet opening of an electric installation for transforming the electric energy and/or parts of the drive line (generator).

10. Wind energy unit according to claim 9,
**characterised in that** the flexible hose is connected on the air intake side to a ventilation device (ventilator) by means of which heated air is blown into the flexible hose.

11. Wind energy unit according to one of the preceding claims 8-10,
**characterised in that** the flexible hose is more than ten metres, preferably more than twenty-five metres, long and fitted in the lower part of the tower in such a way that heated air originating from an electric installation for transforming the electric energy, for example a control cabinet or a power cabinet, is blown through the flexible hose and heated air re-emerges at the outlet of the hose so that it can cool on the tower wall and flows to the base of the tower again.

12. Wind energy unit according to one of the preceding claims,
**characterised in that** the nacelle consists in whole or in part of a metal, preferably aluminium.

13. Wind energy unit according to claim 12,
**characterised in that** the nacelle is equipped in whole or in part with cooling ribs or other means for enlarging the surface area of the nacelle.

14. Use of tower of a wind energy unit as a cooling element and/or heat exchanger for cooling air which is heated by heat-generating installations in the wind energy unit, for example the drive line and/or electric equipment for transforming the electric energy.

## Revendications

1. Éolienne (1) comprenant un circuit de refroidissement intégralement fermé ou partiellement fermé, **caractérisée en ce que** le mât de l'éolienne est intégré sous forme d'élément de refroidissement et/ou d'échangeur thermique dans le circuit de refroidissement avec l'air s'y trouvant comme médium de refroidissement, et **en ce que** la chaleur à évacuer hors du circuit de refroidissement est sensiblement dissipée par l'intermédiaire du mât de l'éolienne.

2. Éolienne selon la revendication 1, **caractérisée en ce que** la ligne de commande (3, 4) de l'éolienne ou des parties de la ligne de commande et/ou des dispositifs électriques (8, 9) destinés à la a transformation de l'énergie électrique sont raccordés au circuit de refroidissement.

3. Éolienne selon l'une quelconque des revendications précédentes, **caractérisée en ce que** le mât (3) est réalisé avec une double paroi sur au moins deux parties le long de son axe longitudinal (figure 4) et une zone à double paroi forme un canal de refroidissement (12, 11), dans lequel l'air chauffé entrant dans le canal de refroidissement transmet sa chaleur à la paroi extérieure du mât (3).

4. Éolienne selon l'une quelconque des revendications précédentes, **caractérisée en ce que** pour le refroidissement de la ligne de commande principale (3, 4), ainsi que des dispositifs (8, 9) du système électronique de puissance, on utilise sensiblement toujours le même air.

5. Éolienne selon l'une quelconque des revendications précédentes, **caractérisée en ce que** le canal de refroidissement comporte au moins un ventilateur (10), qui assure une circulation d'air à l'intérieur du circuit de refroidissement.

6. Éolienne selon l'une quelconque des revendications précédentes, **caractérisée en ce que** l'éolienne peut aussi être mise en service avec des températures extérieures de -20°C à -40°C environ et le mât est chauffé par le circuit de refroidissement.

7. Éolienne selon l'une quelconque des revendications précédentes, **caractérisée en ce que** l'éolienne comporte au moins deux circuits de refroidissement intégralement fermés ou au moins partiellement fermés, un circuit de refroidissement étant utilisé pour le refroidissement de la ligne de commande de l'éolienne et l'autre circuit de refroidissement étant destiné au refroidissement du dispositif électrique destiné à la transformation de l'énergie électrique.

8. Éolienne selon l'une quelconque des revendications précédentes, **caractérisée en ce qu'**il est prévu au moins une conduite d'air, qui sert à transporter l'air chauffé.

9. Éolienne selon la revendication 8, **caractérisée en ce que** la conduite d'air est formée par un tuyau flexible, qui est raccordé à un dispositif de production de chaleur, par exemple à l'orifice de sortie d'air d'un dispositif électrique destiné à la transformation de l'énergie électrique, et/ou à des parties de la ligne de commande (génératrice).

10. Éolienne selon la revendication 9, **caractérisée en ce que** le tuyau flexible est raccordé du côté de l'entrée d'air à une unité de ventilation (ventilateur), au moyen de laquelle l'air chauffé est insufflé dans le tuyau flexible.

11. Éolienne selon l'une quelconque des revendications 8 à 10, **caractérisée en ce que** le tuyau flexible mesure plus de dix mètres de long, de préférence plus de vingt-cinq mètres, et est disposé dans la partie inférieure du mât, de telle sorte que l'air chauffé, qui est dégagé par un dispositif électrique destiné à la transformation de l'énergie électrique, tel qu'une armoire de commande ou une armoire électrique, est insufflé à travers le tuyau flexible et l'air chauffé sort à nouveau par l'orifice de sortie du tuyau, de telle sorte que cet air chauffé peut se refroidir contre la paroi du mât et affluer à nouveau vers le fond du mât.

12. Éolienne selon l'une quelconque des revendications précédentes, **caractérisée en ce que** la nacelle est réalisée intégralement ou partiellement en métal, de préférence en aluminium.

13. Éolienne selon la revendication 12, **caractérisée en ce que** la nacelle est réalisée intégralement ou partiellement avec des ailettes de refroidissement ou d'autres moyens pour agrandir la surface de la nacelle.

14. Utilisation d'un mât d'une éolienne sous forme d'élément de refroidissement et/ou d'échangeur thermique pour le refroidissement de l'air, qui est chauffé par la chaleur dégagée par des dispositifs de l'éolienne, tels que la ligne de commande et/ou le dispositif électrique destiné à la transformation de l'énergie électrique.
